Europäisches Patentamt

**European Patent Office**

Office européen des brevets

(19)

(11) Numéro de publication: **0 208 629 B1**

(12) **FASCICULE DE BREVET EUROPEEN**

(45) Date de publication du fascicule du brevet:
**03.05.89**

(51) Int. Cl.⁴: **B 01 D 13/04,** C 04 B 35/52, C 04 B 38/00

(21) Numéro de dépôt: **86420151.2**

(22) Date de dépôt: **06.06.86**

(54) **Procédé de fabrication d'un support de membrane minérale pour techniques séparatives.**

(30) Priorité: **10.06.85 FR 8509264**

(43) Date de publication de la demande:
**14.01.87 Bulletin 87/3**

(45) Mention de la délivrance du brevet:
**03.05.89 Bulletin 89/18**

(84) Etats contractants désignés:
**AT BE CH DE GB IT LI LU NL SE**

(56) Documents cités:
**EP-A- 0 092 840**
**EP-A- 0 127 887**
**FR-A- 2 228 518**
**FR-A- 2 391 956**
**US-A- 3 856 593**
**US-A- 4 500 328**

(73) Titulaire: **LE CARBONE LORRAINE, Tour Manhattan - La Défense 2, 5-6, place de l'Iris,, F-92400 Courbevoie (FR)**

(72) Inventeur: **Bauer, Jean-Michel, 28, rue Jules Ferry, F-54530 Pagny Sur Moselle (FR)**
Inventeur: **Maire, Jacques, 10, rue du Jourdain, F-75020 Paris (FR)**
Inventeur: **Verna, Maurice Château Sainte Anne, Bâtiment Edelweiss 30/34, avenue de Fabron, F-06200 Nice (FR)**

(74) Mandataire: **Pascaud, Claude et al, PECHINEY 28, rue de Bonnel, F-69433 Lyon Cédex 3 (FR)**

## Description

*Domaine technique de l'invention*

La présente invention est relative à un procédé de fabrication d'un support destiné à recevoir une membrane minérale pour techniques séparatives.

*Etat de la technique*

Dans les techniques séparatives, les procédés comme l'osmose inverse, l'ultrafiltration et la microfiltration ont recours, soit à des membranes organiques, soit, depuis quelques années, à des membranes minérales. Suivant le type d'utilisation, ces membranes doivent posséder des dimensions de pores faibles et appropriées et une épaisseur minimale pour permettre un débit important sans trop de perte de charge. En ce qui concerne les membranes minérales, il est nécessaire de leur donner un support mécaniquement solide.

Pour répondre à ces différents critères, les éléments séparatifs à membrane minérale sont en général constitués d'un support macroporeux sur lequel des couches en céramiques (membrane minérale) sont déposées et frittées sur une face du support (alumine, carbure de silicium, carbone, zircone, oxyde de titane, etc.). Il est à noter que la texture poreuse du support doit être adaptée à la membrane minérale choisie.

Dans le brevet US 4 500 328, on décrit un filtre à poussières constitué par un composite de fibres de carbone liées par du carbone, ou de fibres de céramiques liées par de la céramique, ou fibres de céramiques liées par du carbone. Dans le cas du composite carbone-carbone, l'agent de liaison peut être constitué par une résine phénolique sous forme de grains fins de 5 à 20 µm de dimensions moyenne.

*Problème technique à résoudre*

On constate que, pour obtenir des caractéristiques mécaniques suffisantes, en particulier des résistances à l'éclatement, à la flexion et à l'écrasement pour les tubes, le support doit être épais, ce qui est un handicap pour obtenir la perméabilité la plus grande possible.

Le but principal de l'invention est de surmonter cet inconvénient, tout en conservant au support sa solidité mécanique et une texture poreuse appropriée.

*Description de l'invention*

Ce but est atteint suivant l'invention qui est un procédé de préparation d'un support de membrane minérale pour techniques séparatives, résistant à des pressions élevées, constituée à partir d'un composite carbone-carbone, d'une texture poreuse adaptée à celle de la membrane minérale, ce procédé étant caractérisé par les étapes suivantes:

— on imprègne le matériau composite carbone-carbone constitué par un tissu ou un feutre de fibres de carbone d'épaisseur relativement faible, par un liant constitué par une résine carbonisable,

— on met en forme ledit matériau,

— on procède à la carbonisation du liant,

— on ajuste la texture poreuse.

Cet ajustement de la texture poreuse peut être réalisé soit en effectuant sur le matériau mis en forme au moins un cycle supplémentaire d'imprégnation du matériau avec du liant et de carbonisation dudit liant, soit par dépôt de carbone en phase vapeur, soit par combinaison des deux méthodes.

Le matériau composite carbone-carbone peut être choisi parmi les matériaux composites poreux comprenant un substrat de fibres, de tissus, de feutres de carbone, seuls ou en association et une matrice de carbone.

Le support peut revêtir différentes formes: plaque, tube, etc....

Il existe de nombreux procédés de fabrication de matériaux composites carbone-carbone de formes diverses.

Il est connu, entre autres, de mettre en forme un matériau composite carbone-carbone, c'est-à-dire un substrat en textile de carbone (fibre et/ou tissu et/ou feutre, etc....) rendu rigide par une liaison constituée par du carbone, cette liaison pouvant être obtenue par l'intermédiaire d'une résine carbonisable imprégnant le substrat avant mise en forme, ou par dépôt de carbone en phase vapeur après mise en forme du substrat.

La réalisation de telles structures conduit à des matériaux solides et rigides même sous faible épaisseur. Toutefois, leur texture reste relativement grossière et des pores de taille importante apparaissent (entre les mailles) après rigidification. De tels pores les rendent inutilisables comme supports pour les techniques séparatives.

Pour les rendre utilisables, on procède suivant l'invention à un ajustement de leur texture poreuse.

Cet ajustement peut être obtenu par imprégnation de matériau carbonisable suivi de carbonisation, plusieurs cycles imprégnation-carbonisation pouvant être nécessaires pour aboutir à la texture poreuse requise.

De bons résultats sont ontenus en utilisant des mélanges brai-furfural catalysé au sulfate d'éthyle.

En effet, la carbonisation de tels mélanges conduit à des produits très riches en coke se présentant comme un «grelot» dans les pores les plus gros.

On peut également utiliser des résines phénoliques, furaniques, des brais.

L'ajustement de la texture poreuse peut également être obtenu par dépôt de carbone en phase vapeur, seul ou combiné avec une imprégnation-carbonisation d'un matériau carbonisable.

Il est à noter que, dans tous les cas, les caractéristiques mécaniques des matériaux composites ainsi traités sont encore améliorées.

Pour la réalisation des formes des matériaux composites carbone-carbone rigidifiés, on a indiqué précédemment que l'on pouvait utiliser un substrat en textile de carbone (fibre et/ou tissu et/ou feutre).

Des tissus à 300 g/m² ou des tissus à 400 g/m² associés à un mat de fibres disposées aléatoirement particulièrement bien à l'obtention des supports selon l'invention.

On peut également utiliser de la même manière, seuls ou associés, des fibres, tissus et feutres en polymères réticulés qui seront carbonisés ultérieurement lors du traitement de rigidification.

Lorsque ce traitement de rigidification passe par l'intermédiaire d'une résine carbonisable, on choisit de préférence une résine laissant un taux de coke élevé (supérieur à 50%). Les résines phénoliques sont à cet égard bien appropriées.

La mise en forme des matériaux composites suivant la forme de support souhaitée peut être obtenue par toute technique convenable connue telle que: enroulement filamentaire, enroulement de tissus, etc.... pour des tubes, ou empilement de tissus, feutres, etc... pour des plaques.

Toutefois, une technique est particulièrement adaptée du point de vue économique, lorsque la rigidification passe par l'intermédiaire d'une résine carbonisable. Il s'agit de la technique en continu appelée «pultrusion». Elle permet de réaliser des structures associant, entre autres, tissus et feutres: au lieu de tirer comme dans la technique habituelle, des «rovings» fibres longues préimprégnées, puis saturées de résine, dans une filière de mise en forme et de polymérisation, on utilise et tire à la fois un tissu et un feutre de carbone. Ces matériau sont également saturés de résine à l'entrée ou dans la filière de mise en forme. Le produit composite ainsi obtenu est rigide; il est ensuite carbonisé à l'abri de l'air à une température supérieure à la température d'utilisation du support.

Les supports selon l'invention conviennent particulièrement pour l'élaboration d'éléments séparatifs à membrane minérale utilisables dans les techniques séparatives telles que osmose inverse, ultrafiltration, microfiltration.

Il est à noter qu'en outre, ils peuvent être utilisés tels quels, sans adjonction de membrane minérale, comme éléments séparatifs en microfiltration tangentielle.

## Revendications

1. Procédé de préparation d'un support de membrane minérale pour techniques séparatives, résistant à des pressions élevées, constituée à partir d'un composite carbone-carbone, d'une texture poreuse adaptée à celle de la membrane minérale, ce procédé étant caractérisé par les étapes suivantes:
— on imprègne le matériau composite carbone-carbone constitué par un tissu ou un feutre de fibres de carbone d'épaisseur relativement faible, par un liant constitué par une résine carbonisable,
— on met en forme ledit matériau,
— on procède à la carbonisation du liant,
— on ajuste la texture poreuse.

2. Procédé selon recendication 1, caractérisé en ce que l'ajustement de la texture poreuse est réalisé en effectuent sur le matériau mis en forme au moins un cycle supplémentaire d'imprégnation du matériau avec du liant et de carbonisation dudit liant.

3. Procédé selon revendication 1, caractérisé en ce que l'ajustement de la texture poreuse est obtenu par dépôt de carbone en phase vapeur.

4. Procédé selon revendication 1, caractérisé en ce que l'ajustement de la texture poreuse est réalisé par combinaison de dépôt de carbone en phase vapeur et d'imprégnation de liant suivie d'une carbonisation.

5. Procédé selon l'une quelconque des revendications 1 à 4, caractérisé en ce que le liant carbonisable est choisi parmi les résines phénoliques, les résines furaniques, les brais, les mélanges brai-furfural catalysés au sulfate d'éthyle.

## Patentansprüche

1. Verfahren zur Herstellung eines Trägers einer mineralischen Membran für Trennungstechniken, der bei hohen Drücken beständig ist und, ausgehend von einem Kohlenstoff-Kohlenstoff-Verbund, aus einem porösen, an das der mineralischen Membran angepaßten Gefüge besteht, welches Verfahren durch die folgenden Schritte gekennzeichnet ist:
— Man imprägniert das Kohlenstoff-Kohlenstoff-Verbundmaterial, das aus einem Gewebe oder einem Filz aus Kohlenstoffasern relativ ggeringer Dicke besteht, mit einem aus einem karbonisierbaren Harz bestehenden Bindemittel,
— man bringt das Material in Form,
— man nimmt die Karbonisierung des Bindemittels vor, und
— man vervollständigt das poröse Gefüge.

2. Verfahren nach Anspruch 1, dadurch gekennzeichnet, daß die Vervollständigung des porösen Gefüges durchgeführt wird, indem man das in Form gebrachte Material wenigstens einem ergänzenden Zyklus einer Imprägnierung des Materials mit dem Bindemittel und einer Karbonisierung dieses Bindemittels unterwirft.

3. Verfahren nach Anspruch 1, dadurch gekennzeichnet, daß die Vervollständigung des porösen Gefüges durch Abscheidung von Kohlenstoff in Dampfphase erhalten wird.

4. Verfahren nach Anspruch 1, dadurch gekennzeichnet, daß die Vervollständigung des porösen Gefüges durch Kombination einer Abscheidung von Kohlenstoff in Dampfphase und einer Bindemittelimprägnierung mit nachfolgender Karbonisierung durchgeführt wird.

5. Verfahren nach irgendeinem der Ansprüche 1 bis 4, dadurch gekennzeichnet, daß das karbonisierbare Bindemittel unter den Phenolharzen, den Furanharzen, den Pechen und den mit Ethylsulfat katalysierten Pech-Furfural-Gemischen gewählt wird.

## Claims

1. A process for the preparation of a support for a mineral membrane for separation procedures, which is resistant to high pressures and which is formed from a carbon-carbon composite material of a porous texture suited to that of the mineral membrane, the process being characterised by the following steps:
— the carbon-carbon composite material which is formed by a cloth or a felt of carbon fibres of relatively small thickness is impregnated by a bonding agent formed by a carbonisable resin,
— said material is shaped,
— carbonisation of the bonding agent is effected, and
— the porous texture is adjusted.

2. A process according to claim 1 characterised in that adjustement of the porous texture is effected by carrying out on the shaped material at least one additional cycle of impregnation of the material with bonding agent and carbonisation of said bonding agent.

3. A process according to claim 1 characterised in that adjustement of the porous texture is effected by deposit of carbon from the vapour phase.

4. A process according to claim 1 characterised in that adjustement of the porous texture is effected by combination of deposit of carbon from the vapour phase and impregnation with bonding agent followed by a carbonisation operation.

5. A process according to any one of claims 1 to 4 characterised in that the carbonisable bonding agent is selected from phenolic resins, furanic resins, pitches and mixtures of pitch and furfural, which are catalysed with ethyl sulphate.